**Europäisches Patentamt**

(19) **European Patent Office**

**Office européen des brevets**

(11) Numéro de publication: **0 235 023**
**B1**

(12) FASCICULE DE BREVET EUROPEEN

(45) Date de publication du fascicule du brevet:
06.06.90

(51) Int. Cl.⁵: **G01N 23/16**, G01N 9/24

(21) Numéro de dépôt: **87400296.7**

(22) Date de dépôt: **10.02.87**

(54) **Procédé et appareil d'analyse des variations de densité d'un produit en forme de cigarette.**

(30) Priorité: **14.02.86 FR 8602013**

(43) Date de publication de la demande:
**02.09.87 Bulletin 87/36**

(45) Mention de la délivrance du brevet:
**06.06.90 Bulletin 90/23**

(84) Etats contractants désignés:
**CH DE GB LI**

(56) Documents cités:
**DE-A- 2 019 975**
**FR-A- 2 091 615**
**GB-A- 2 155 630**
**US-A- 2 932 391**
**US-A- 3 240 940**
**US-A- 3 604 429**

(73) Titulaire: **SOCIETE NATIONALE D'EXPLOITATION INDUSTRIELLE DES TABACS ET ALLUMETTES, 53, quai d'Orsay, F-75340 Paris Cedex 07(FR)**

(72) Inventeur: **Cholet, Georges, 12, Venelle du Souhait, F - 45000 Orleans(FR)**
Inventeur: **Poulet, Jean-Remi, 20, rue Carnot, F - 45400 Fleuty-Les-Aubrais(FR)**

(74) Mandataire: **Bloch, Gérard et al, 2, square de l'Avenue du Bois, F-75116 Paris(FR)**

ACTORUM AG

## Description

La présente invention a tout d'abord pour objet un procédé d'analyse des variations de densité d'un article en forme de cigarette, dans lequel :
- on soumet à un rayonnement radioactif de type β une zone dudit article,
- on mesure l'intensité dudit rayonnement après traversée dudit article,
- on fait défiler ledit article dans le sens longitudinal,
- on enregistre les variations de l'intensité mesurée.

Un tel procédé est utilisé pour contrôler le remplissage en tabac d'un boudin de tabac continu destiné à être débité en cigarettes, ou encore d'une cigarette unitaire. En effet, il est connu que l'atténuation d'un rayonnement β lorsqu'il traverse une épaisseur donnée d'un matériau dépend de la masse spécifique, c'est-à-dire de la densité, de ce matériau. Un procédé du type défini ci-dessus permet donc, par exemple, de vérifier l'homogénéité du remplissage dans le cas de cigarettes homogènes, ou, au contraire, de vérifier la position de zones intentionnellement prévues avec une densité plus élevée, dites "zones renforcées", devant coïncider avec les extrémités de chaque cigarette, dans le cas de cigarettes dites "légères". Dans ce dernier cas, en effet, le remplissage en tabac de la zone médiane est peu dense, et, en l'absence de zones renforcées, le tabac s'écoulerait hors des cigarettes au cours des manipulations de celles-ci. Un tel procédé peut être utilisé également pour la détection de corps étrangers à l'intérieur du boudin de tabac ou de la cigarette, ou pour le contrôle de la jonction entre le tabac et le filtre, et même pour le contrôle d'un boudin de matière filtrante.

L'état de la technique est montré dans les documents: US-A 2 932 391 et FR-A 2 091 615.

On connaît déjà un tel procédé, dans lequel l'article à analyser défile à l'intérieur d'un manchon en aluminium pourvu d'ouvertures définissant la dimension longitudinale de la zone traversée par le rayonnement, qui est de l'ordre de un à deux centimètres. Cette longueur correspond sensiblement à la dimension longitudinale de la zone sensible du capteur utilisé pour mesurer l'intensité du rayonnement atténué. De plus comme l'épaisseur d'aluminium est insuffisante pour arrêter le rayonnement, les limites de la zone traversées sont floues. Il en résulte qu'à un instant donné, l'intensité mesurée par le capteur est représentative de la densité moyenne sur une dimension longitudinale assez mal définie.

Compte tenu de la valeur élevée de cette dernière, relativement à la longueur d'une cigarette, la résolution longitudinale de l'analyse est donc de l'ordre de un centimètre, ce qui ne permet pas de détecter un corps étranger de dimensions de l'ordre du millimètre par exemple, et ne permet pas, à cause du lissage des discontinuités qui résulte de cette mauvaise résolution, d'étudier finement une cigarette unitaire, ou un tronçon discontinu. L'expérience montre même que le procédé connu, assez bien adapté pour contrôler l'homogénéité d'un boudin de tabac uniforme, ne permet qu'imparfaitement l'analyse des boudins inhomogènes à zones renforcées de plus en plus utilisés pour la fabrication de cigarettes légères. Dans ce dernier cas, le procédé connu permet seulement de déterminer de manière statistique. la position des zones renforcées, par intégration des résultats obtenus après passage d'un grand nombre de ces zones renforcées, car la variation d'intensité occasionnée par une seule zone est trop faible et trop lissée pour qu'on puisse en localiser le maximum avec précision.

La présente invention vise à pallier les inconvénients précédents.

A cet effet, elle a pour objet un procédé du type défini ci-dessus, caractérisé par le fait que :
- ladite zone ayant une dimension longitudinale L inférieure ou égale à 1 mm,
- on enregistre les mesures d'intensité chaque fois que le déplacement dudit article est au moins égal à L.

Avec le procédé de l'invention, chaque mesure d'intensité enregistrée est représentative d'une zone de l'article dont la dimension longitudinale L est faible relativement à la longueur d'une cigarette unitaire, et la mesure suivante est représentative d'une zone de même dimension longitudinale L, mais distincte de la zone voisine. Ainsi, il n'y a aucune influence d'une zone analysée sur les zones analysées voisines, et la suite des mesures d'intensité enregistrées représente bien les variations longitudinales de densité de l'article analysé, sans lissage, et avec une résolution assez fine pour que l'analyse des zones discontinues, comme les extrémités, soit significative. La présence d'un corps étranger, même de taille relativement modeste, peut être localisée avec une précision suffisante, et l'analyse d'une zone renforcée unique est représentative.

Avantageusement, on peut faire défiler ledit article à une vitesse continue V, et échantillonner à une fréquence au plus égale à V/L.

Avantageusement, encore, chaque mesure d'intensité enregistrée a pour valeur la valeur moyenne d'une pluralité de mesures successives.

Ainsi, la précision de la mesure est accrue, le moyennage de plusieurs mesures successives permettant de réduire l'influence du bruit accompagnant le signal.

La présente invention a également pour objet un appareil permettant la mise en oeuvre du procédé de l'invention.

A cet effet, la présente invention concerne donc également un appareil comprenant :
- une source de rayonnement radioactif de type β,
- un capteur, sensible à l'intensité dudit rayonnement, à signal de sortie électrique,
- un manchon dans lequel sont ménagées deux ouvertures se faisant face, une première ouverture étant disposée pour être soumise au rayonnement de ladite source, et la deuxième ouverture étant disposée en regard dudit capteur,
- des moyens pour faire défiler ledit article à l'intérieur du manchon,
- des moyens d'enregistrement, reliés audit capteur, appareil caractérisé par le fait que :
- le matériau dans lequel est réalisé ledit manchon, et l'épaisseur de paroi dudit manchon sont tels que la totalité du rayonnement β émis par ladite source est arrêtée par cette paroi,

- lesdites ouvertures sont deux fentes ménagées dans un même plan de section droite du manchon et ont une dimension longitudinale L inférieure ou égale à 1 mm,
- les moyens d'enregistrement comprennent des moyens pour réduire le rapport signal sur bruit en sortie dudit capteur, et des moyens pour échantillonner le signal de sortie du capteur.

Dans l'appareil de l'invention, on réalise l'analyse d'une zone de l'article de faible dimension longitudinale en utilisant une source de rayonnement et un capteur de dimensions conventionnelles, grâce au manchon imperméable au rayonnement β, pourvu de fentes, et on compense l'affaiblissement résultant de signal utile sur le capteur grâce aux moyens pour réduire le rapport signal sur bruit en sortie du capteur, et à l'échantillonnage qui permet le traitement ultérieur des mesures enregistrées.

Avantageusement, ladite source émet un rayonnement β de spectre d'énergie maximale égal à sensiblement 2,5 MeV, ledit matériau dans lequel est réalisé ledit manchon est du bronze de type UE 12ZI enrichi de sensiblement 9 % de plomb, et ladite épaisseur de paroi dudit manchon est de sensiblement 3 mm.

Dans ce cas, l'épaisseur du manchon est double de celle qui arrête théoriquement la totalité du rayonnement de la source. Le rayonnement qui atteint le capteur est donc uniquement celui qui est passé à travers l'article à analyser.

La présente invention sera mieux comprise à l'aide de la description suivante de la forme de réalisation préférée de l'appareil de l'invention, ainsi que de la mise en oeuvre préférée du procédé de l'invention, faite en référence aux dessins annexés, sur lesquels :

- la fig. 1 représente une vue de profil schématique d'une partie de l'appareil de l'invention,
- la fig. 2 représente une vue de face de la partie de l'appareil de la figure 1,
- la fig. 3 représente un schéma par blocs du circuit électronique de commande et de traitement de l'appareil de la figure 1, et,
- les fig. 4a et 4b présentent les résultats obtenus avec l'appareil de l'invention dans le cas d'une cigarette, et dans le cas de cinquante cigarettes, respectivement.

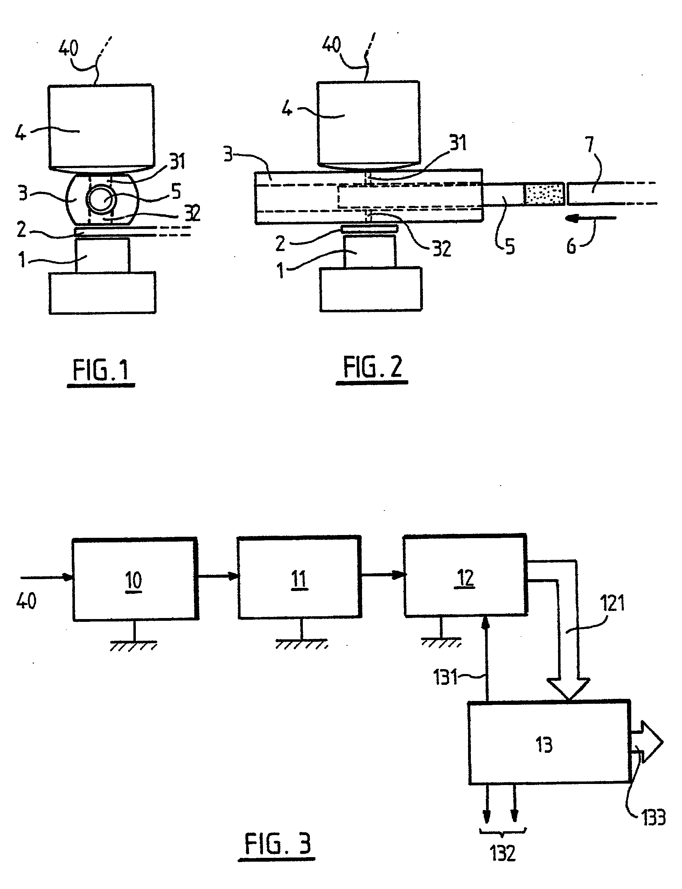

En se référant aux figures 1 et 2, un appareil pour mesurer les variations longitudinales de densité d'une cigarette 5 comprend :
- une source 1 de rayonnement radioactif de type β,
- un volet d'obturation 2 de la zone rayonnante de la source 1, partiellement représenté car classique,
- un manchon 3, dans lequel est ménagée une fente 32, contenue dans un plan de section droite du manchon, disposé pour que la fente 32 se trouve en regard de la zone rayonnante de la source 1 lorsque celle-ci n'est pas obturée par le volet d'obturation 2,
- un capteur 4 de rayonnement β, dont la zone sensible est disposée en regard d'une fente 31 ménagée dans le manchon 3, et contenue dans le même plan de section droite que la fente 32.

Le manchon 3 est de diamètre intérieur correspondant à celui de la cigarette 5 à analyser et un organe pousseur 7, partiellement représenté car classique est prévu pour faire défiler la cigarette, dans le sens longitudinal 6, à travers le manchon 3.

La source 1 est du type connu à pastille de strontium 90. Ici, il s'agit de la source fabriquée par la société anglaise Radiochemical Centre sous la référence SIF W 280 et dont le spectre est d'énergie moyenne 0,8 Mev et d'énergie maximale 2,4 Mev.

Le manchon 3 est ici réalisé dans du bronze du type UE 12Z1, enrichi de 9 % de plomb. Le bronze UE 12Z1 a pour composition :
Cu : 84 %
Sn : pas moins de 10,5 %
Sb : 0,3 %
Pb : 1 %
Fe : 0,2 %
Ni : 1 %
Zn : 2 %
autres : 1 %

Après mélange de 100 parties de bronze UE 12Z1 à 9 parties de plomb, on obtient un matériau dont la masse spécifique est d'environ 10 g/cm³.

Le manchon 3 est prévu pour que l'épaisseur minimale de paroi séparant la cigarette 5 de la source 1 lorsque celle-ci n'est pas obturée soit égale à 3 mm. Or, les courbes d'atténuation connues d'un rayonnement β en fonction de l'épaisseur et de la masse spécifique du matériau qu'il traverse montrent que le rayonnement émis par la source 1, de spectre d'énergie maximale 2,4 Mev, est arrêté après 1,4 mm du matériau utilisé pour réaliser le manchon 3. Ainsi, on peut dire que la totalité du rayonnement β émis par la source 1 est arrêtée par la paroi du manchon 3.

Les fentes 31 et 32 pratiquées dans le manchon ont ici une dimension longitudinale L de 0,8 mm.

Le capteur 4 est ici une chambre d'ionisation de type connu, délivrant sur un conducteur 40, un signal dépendant de l'intensité du rayonnement β reçu par la zone sensible de la chambre d'ionisation 4.

Par souci de simplicité, l'appareil de l'invention n'est représenté que partiellement sur les figures 1 et 2. Il comprend de plus tous les dispositifs nécessaires, comme par exemple les blindages, lorsqu'on utilise une source radioactive et une chambre d'ionisation. Ces dispositifs sont bien connus de l'homme de métier. De même, toutes les précautions sont prises pour éviter les fuites entre la zone rayonnante de la source 1 et la zone sensible de la chambre d'ionisation 4.

L'organe pousseur 7 est entraîné ici par un moteur pas à pas non représenté car classique.

Le signal de sortie de la chambre d'ionisation, délivré sur le conducteur 40, est traité à l'aide d'un circuit électronique, schématiquement représenté sur la figure 3.

Le circuit de la figure 3 comprend un amplificateur 10, un filtre passe bas 11, un convertisseur analogique-numérique 12 montés en cascade. Un microprocesseur 13 est relié par un conducteur 131 à l'entrée de commande de conversion du convertisseur analogique-numérique 12 et par un bus 121, à la sortie numérique du convertisseur analogique-numérique 12. Le microprocesseur 13 est aussi relié, par un bus 133, à un dispositif électronique de mémorisation et de visualisation non représenté car classique, ainsi que, par les conducteurs 132, à l'organe de commande du volet obturateur 2 et à l'entrée de commande du moteur pas à pas d'entraînement de l'organe pousseur 7.

L'amplificateur 10 est du type connu utilisé en instrumentation, à impédance d'entrée élevée et à grand gain.

Le filtre passe bas 11 est ici un filtre de Butterwortk du 3ème ordre, dont la fréquence de coupure vaut 15 HZ, et le gain statique 80. La réalisation d'un tel filtre, sous forme de filtre actif est à la portée de l'homme de métier.

Le convertisseur analogique-numérique 12 est de type connu, la conversion étant effectuée ici sur 12 bits.

L'appareil qui vient d'être décrit fonctionne de la façon suivante.

Un système connu de trémie et de barillet, non représenté, permet de positionner la cigarette 5 à l'entrée du manchon 3. Le microprocesseur 13 commande le moteur pas à pas qui entraîne l'organe pousseur 7. L'utilisation d'un tel moteur permet de connaître avec précision la position de la cigarette 5 par rapport à sa position initiale connue ou facilement repérable par tous moyens connus de l'homme de métier, comme par exemple un capteur de position.

Bien que le moteur pas à pas soit commandé de façon discontinue, la vitesse V de déplacement de l'organe pousseur est avantageusement ici continue à cause de l'inertie mécanique du dispositif.

V est ici égale à 16,6 mm/s.

Le microprocesseur 13 commande l'ouverture du volet obturateur 2 lorsque la cigarette 5 atteint la zone en regard des fentes 31 et 32, ici de dimension longitudinale L = 0,8 mm, et commande un échantillonnage des mesures d'intensité chaque fois que la cigarette s'est déplacée d'une valeur déterminée au moins égale à L, par exemple de l'ordre de 1 mm de manière à analyser chaque zone indépendamment l'une de l'autre. A la limite ces deux zones pourraient être consécutives. Chaque mesure enregistrée correspond ici à la moyenne, calculée par le microprocesseur 13, du résultat de vingt conversions successives effectuées par le convertisseur analogique/numérique 12. Chaque conversion dure 10 µs, la cigarette avance donc de 3,3 microns pendant la durée de ces vingt conversions, c'est-à-dire qu'on peut la considérer comme pratiquement immobile pendant cette durée.

Le bruit qui affecte chaque mesure d'intensité est réduit d'une part à cause du traitement analogique effectué par le filtre passe-bas 11 et d'autre part par le traitement numérique effectué par le moyennage commandé par le microprocesseur 13.

Lorsque l'ensemble de la cigarette 5 a été analysé, le microprocesseur 13 ferme l'obturateur 2, et envoie les données vers le dispositif de mémorisation et de visualisation via le bus 133.

Un dispositif de type connu permet l'évacuation de la cigarette 5 analysée et le positionnement d'une nouvelle cigarette 5 à analyser.

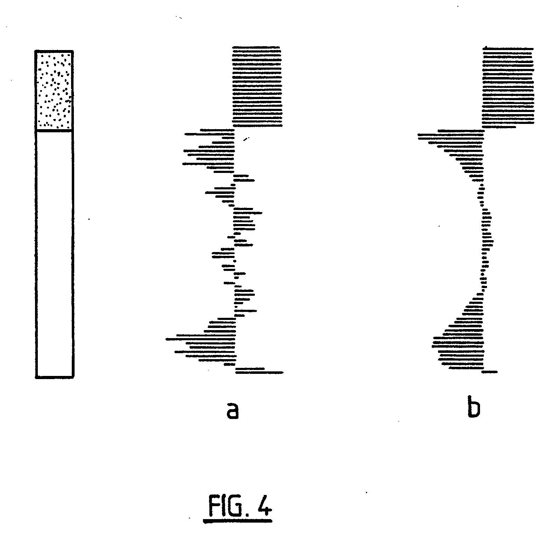

Les résultats obtenus sont montrés sur les figs. 4a et 4b. La fig. 4a visualise les variations de densité d'une cigarette unique et la fig. 4b les variations moyens d'un lot de cinquante cigarettes. On constate que les résultats sur une cigarette unique sont parfaitement exploitables.

Naturellement, l'invention n'est pas limitée à l'analyse de cigarettes unitaires, et peut être aussi utilisée en particulier pour l'analyse d'un boudin continu de tabac.

De même, les fentes 31 et 32 peuvent, au lieu de déboucher directement à l'intérieur du manchon comme cela vient d'être décrit, en être isolées par une mince pellicule de matériau léger, afin que le manchon présente une face interne lisse pour éviter l'accrochage des particules de tabac.

De même, l'utilisation d'un moteur pas à pas pour entraîner le pousseur 7 n'est pas obligatoire et on peut utiliser un moteur classique, conjointement avec un capteur de position permettant le repérage de la position de la cigarette 5.

Enfin, ce moteur pourrait être utilisé conjointement avec un capteur de vitesse de déplacement de l'organe pousseur 7. Dans ce cas lorsque l'article se déplace à la vitesse V, le microprocesseur 13 commande un échantillonnage des mesures d'intensité à une fréquence F au plus égale à V/L.

## Revendications

1.- Procédé d'analyse des variations de densité d'un article en forme de cigarette, dans lequel :
- on soumet à un rayonnement radioactif de type β une zone dudit article,
- on mesure l'intensité dudit rayonnement après traversée dudit article,
- on fait défiler ledit article dans le sens longitudinal,
- on enregistre les variations de l'intensité mesurée, procédé caractérisé par le fait que :
- ladite zone ayant une dimension longitudinale L inférieure ou égale à 1 mm,
- on enregistre les mesures d'intensité chaque fois que le déplacement dudit article est au moins égal à L.

2.- Procédé selon 1, dans lequel le défilement dudit article se faisant à une vitesse continue V,
- on enregistre les mesures d'intensité après les avoir échantillonnées à une fréquence F au plus égale à V/L.

3.- Procédé selon l'une des revendications 1 et 2, dans lequel chaque mesure d'intensité enregistrée a pour valeur la valeur moyenne d'une pluralité de mesures successives.

4.- Appareil pour la mise en oeuvre du procédé selon l'une des revendications 1 à 3, comprenant :
- une source (1): de rayonnement radioactif de type β,
- un capteur (4), sensible à l'intensité dudit rayonnement, à signal de sortie électrique,
- un manchon (3) dans lequel sont ménagées deux ouvertures (31, 32) se faisant face, une première ouverture (32) étant disposée pour être soumise au rayonnement de ladite source (1) et la deuxième ouverture (31) étant disposée en regard dudit capteur (4),

- des moyens (7, 13) pour faire défiler ledit article (5) à l'intérieur du manchon (3),
- des moyens d'enregistrement, reliés audit capteur (4), appareil caractérisé par le fait que:
- le matériau dans lequel est réalisé ledit manchon (3), et l'épaisseur de paroi dudit manchon (3) sont tels que la totalité du rayonnement β émis par ladite source (1) est arrêtée par cette paroi,
- lesdites ouvertures sont deux fentes (31, 32) ménagées dans un même plan de section droite du manchon (3) et ont une dimension longitudinale L inférieure ou égale à sensiblement 1 mm,
- les moyens d'enregistrement comprennent des moyens (11) pour réduire le rapport signal sur bruit en sortie dudit capteur (4), et des moyens (12, 13) pour échantillonner le signal de sortie du capteur (4).

5. Appareil selon la revendication 4, dans lequel ladite source (1) émet un rayonnement β de spectre d'énergie maximale égal à sensiblement 2,5 MeV, ledit matériau dans lequel est réalisé ledit manchon (3) est du bronze de type UE 12Z1 enrichi de sensiblement 9 % de plomb, et ladite épaisseur de paroi dudit manchon (3) est de sensiblement 3 mm.

6. Appareil selon l'une des revendications 4 à 5, dans lequel lesdits moyens pour réduire le rapport signal sur bruit comprennent un filtre passe-bas (11).

7. Appareil selon l'une des revendications 4 à 6, dans lequel lesdits moyens pour échantillonner comprennent un convertisseur analogique-numérique (12) et un microprocesseur (13).

## Patentansprüche

1. Verfahren zum Analysieren der Dichtigkeitsschwankungen eines Artikels in Form einer Zigarette, bei welchem:
- eine Zone des genannten Artikels einer radioaktiven Strahlung der Type β ausgesetzt wird,
- die Intensität der genannten Strahlung nach Durchgang durch den genannten Artikel gemessen wird,
- der genannte Artikel in Längsrichtung läuft,
- die Schwankungen der gemessenen Intensität aufgezeichnet werden, Verfahren dadurch gekennzeichnet, daß
- da die genannte Zone eine Länge L aufweist, welche kleiner als oder gleich 1 mm ist,
- die Intensitätsmessungen jedesmal aufgezeichnet werden, wenn die Verschiebung des Artikels zumindest gleich L ist.

2. Verfahren gemäß Anspruch 1, bei welchem, da das Durchlaufen des genannten Artikels bei gleichmäßiger Geschwindigkeit V erfolgt,
- die Intensitätsmessungen aufgezeichnet werden, nachdem sie bei einer höchstens V/L gleichen Frequenz einer Momentwertbildung unterzogen wurden.

3. Verfahren gemäß einem der Ansprüche 1 und 2, bei welchem jede aufgezeichnete Intensitätsmessung den Mittelwert einer Vielzahl von aufeinanderfolgenden Messungen zum Wert hat.

4. Apparat zur Anwendung des Verfahrens gemäß einem der Ansprüche 1 bis 3, bestehend aus:
- einer Quelle (1) radioaktiver Strahlung der Type β,
- einem Sensor (4) mit elektrischem Ausgangssignal, welcher für die Intensität der genannten Strahlung empfindlich ist,
- einem Rohr (3), in welchem sich zwei Öffnungen (31, 32) befinden, die einander gegenüberliegen, wobei eine erste Öffnung (32) so angeordnet ist, daß sie von der genannten Quelle (1) bestrahlt wird und die zweite Öffnung (31) dem genannten Sensor (4) gegenüber angeordnet ist,
- Vorrichtungen (7, 13), um den genannten Artikel (5) durch das Rohr (3) durchlaufen zu lassen,
- Vorrichtungen zum Aufzeichnen, welche mit dem genannten Sensor (4) verbunden sind, Apparat dadurch gekennzeichnet, daß:
- das Material, aus welchem das genannte Rohr (3) hergestellt ist, und die Wandstärke des genannten Rohres (3) dergestalt sind, daß die gesamte, von der genannten Quelle (1) abgegebene β-Strahlung von dieser Wand aufgehalten wird,
- die genannten Öffnungen zwei Schlitze (31, 32) sind, welche in dieselbe Querschnittsebene des Rohres (3) eingebracht sind und eine Länge L aufweisen, welche kleiner als oder gleich 1 mm ist,
- die genannten Vorrichtungen zum Aufzeichnen Mittel (11) umfassen, um das Verhältnis Signal : Rauschen am Ausgang des genannten Sensors (4) zu reduzieren und Mittel (12, 13) zum Erfassen des Momentwertes des Ausgangssignals des Sensors (4).

5. Apparat gemäß Anspruch 4, bei welchem die genannte Quelle (1) eine β-Strahlung mit einem maximalen Energiespektrum von gleich 2,5 MeV abgibt, wobei das Material, aus welchem das genannte Rohr hergestellt ist, Bronze der Type UE 12Z1 mit 9% Bleianreicherung ist und die genannte Wandstärke des genannten Rohres (3) 3 mm beträgt.

6. Apparat gemäß einem der Ansprüche 4 bis 5, bei welchem die genannten Mittel zur Reduzierung des Verhältnisses Signal : Rauschen einen Tiefpaßfilter (11) umfassen.

7. Apparat gemäß einem der Ansprüche 4 bis 6, bei welchem die genannten Vorrichtungen zur Momentwertbildung einen Analog/Digital-Wandler (12) und einen Mikroprozessor (13) umfassen.

## Claims

1. A method for the analysis of variations of density of an article in the form of a cigarette, in which:
- one area of said article is subjected to radioactive radiation of the β type,
- the intensity of said radiation is measured after passing through said article,
- said article is made to travel in the longitudinal direction;
- the variations of the intensity measured are recorded, characterised in that:
- said area has a longitudinal dimension L less than or equal to 1 mm, and
- the measurements of intensity are recorded each time the movement of said article is at least equal to L.

2. A method according to claim 1, in which the travel of said article takes place at a continuous speed V,
- the measurements of intensity being recorded after having sampled them at a frequency F at the most equal to V/L.

3. A method according to one of claims 1 and 2, in which the value of each measurement of intensity recorded is the average value of a plurality of successive measurements.

4. An apparatus for carrying out the method according to one of claims 1 to 3, comprising:
- a source (1) of radioactive radiation of type β,
- a sensor (4), sensitive to the intensity of said radiation, with an electrical output signal,
- a sleeve (3) in which two openings (31, 32) in facing relationship are provided, a first opening (32) being disposed in order to be subject to the radiation of said source (1) and the second opening (31) being disposed opposite said sensor (4),
- means (7, 13) for causing said article (5) to travel inside the sleeve (3),
- recording means connected to said sensor (4), characterised in that:
- the material from which the said sleeve (3) is made and the wall thickness of said sleeve (3) are such that the entire β radiation emitted by said source (1) is stopped by this wall,
- said openings are two slots (37, 32) provided in the same cross-sectional plane of the sleeve (3) and have a longitudinal dimension L less than or equal to 1 mm, and
- the recording means comprise means (11) for reducing the signal to noise ratio at the output of said sensor (4) and means (12, 13) for sampling the output signal of the sensor (4).

5. An apparatus according to claim 4, in which said source (1) emits β radiation having a maximum energy spectrum equal to substantially 2.5 MeV, the material from which said sleeve (3) is made is bronze of the UE 12Z1 type substantially enriched with 9% lead and said wall thickness of said sleeve (3) is substantially 3 mm.

6. Apparatus according to one of claims 4 and 5, in which said means for reducing the signal to noise ratio comprise a low pass filter (11).

7. Apparatus according to one of claims 4 to 6, in which said means for sampling comprise an analog to digital converter (12) and a microprocessor (13).

FIG.1

FIG.2

FIG.3

a

b

FIG. 4